Europäisches Patentamt

European Patent Office

Office européen des brevets

(19)

(11) Publication number: 0 302 703
A2

# (12) EUROPEAN PATENT APPLICATION

(21) Application number: 88307128.4

(22) Date of filing: 02.08.88

(51) Int. Cl.⁴: B 29 C 51/16
B 29 C 51/28

(30) Priority: 07.08.87 US 83513

(43) Date of publication of application:
08.02.89 Bulletin 89/06

(84) Designated Contracting States:
DE ES FR GB IT NL SE

(71) Applicant: MINNESOTA MINING AND MANUFACTURING
COMPANY
3M Center, P.O. Box 33427
St. Paul, Minnesota 55133-3427 (US)

(72) Inventor: Naglosky III, Max c/o Minnesota Mining and
Manufacturing Company 2501 Hudson Road
P.O.Box 33427
St. Paul Minnesota 55133-3427 (US)

Johnson, Dee Lynn c/o Minnesota Mining and
Manufacturing Company 2501 Hudson Road
P.O.Box 33427
St. Paul Minnesota 55133-3427 (US)

(74) Representative: Baillie, Iain Cameron et al
c/o Ladas & Parry Isartorplatz 5
D-8000 München 2 (DE)

(54) Method and apparatus for vacuum-application of a film to surface of an article.

(57) Method and apparatus for applying substantially-impermeable conformable film to application surface of an article which may have one or more depressions therein. The article is placed in a first pressure chamber which is sealed from a second pressure chamber by the film. After both pressure chambers are substantially evacuated, the second pressure chamber is pressurized such that the film is distended into the first pressure chamber and intimately conformed to the surface of the article. The film and article are then bonded together.

Fig.3

## Description

## METHOD AND APPARATUS FOR VACUUM-APPLICATION OF A FILM TO SURFACE OF AN ARTICLE

Field of Invention

This invention concerns vacuum-application of a film to the surface of an article, particularly an article which may have one or more depressions in the surface thereof, and specifically concerns a method and apparatus for doing so.

Background Art

Vacuum-application or vacuum-forming, i.e., application with a differential pressure, of decorative films, e.g., decals, woodgrain prints, signing, etc., to desired substrates has been common practice in the art. The conventional practice involves the contact placing of a film, typically coated with a heat-activatable adhesive, onto an application surface or workpiece. A differential pressure is used to conform the film article to the surface and the adhesive then activated to bond the film thereto.

Many previously known methods for vacuum-application of a film to a surface having depressions therein rely upon discontinuous or porous films or substrates to achieve intimate, bubble-free contact between the film and substrate. Typically, either the film or substrate, or, in some instances, both, comprise a pattern of channels or perforations that provide a passage for trapped gas to escape from between the film and substrate as they are brought into contact and bonded together. Provision of such channels or perforations effectively limits such vacuum-forming techniques to only those instances where either the film or substrate or both can be so structured, and may interfere with the aesthetic appearance of the finished product. Furthermore, such channels may tend to limit the degree of protection which a film comprising same may provide to the underlying surface of the substrate. For instance, such perforated films typically would provide only limited protection against the corrosion of an underlying steel plate.

British Patent No. 1,444,748 (Iberica de Calcomanias, S.A.) discloses a method of applying transfers to articles having a bent (i.e., concave) portion wherein the transfer film is provided with one or more orifices for removal of the air trapped between the transfer film and desired surface. U.S. Patent No. 4,457,797 (Hatchadoorian et al.) discloses a process and apparatus for thermoforming reinforced polyethylene terephthalate sheets wherein the air between the mold surface and the sheet is removed through a vent in the surface of the mold.

British Patent No. 1,475,051 (Norton-Berry et al.) discloses a transfer coating process which employs pneumatic or pressure differential means by which a flexible carrier sheet having a coating thereon is contacted to an article which may be of irregular shape, thereby transferring the coating to the surface of the article. The process disclosed therein, however, would typically not be useful for those articles having well-defined depressions in the surface thereof, because of the tendency for gas to become trapped in the depressions.

U.S. Patent No. 3,549,446 (Bennet et al.) discloses a method for separating a transfer film from a liner and applying the film to the inner surface of a depression such as a bowl or dish. The transfer film is on a liner with a hole provided in the middle thereof. Application is achieved by applying a vacuum to the back side of the liner while simultaneously or subsequently applying a vacuum to the cavity in which the dish is located. Simultaneously with application of the vacuum to the cavity, atmospheric or positive pressure is permitted to pass through the hole in the liner against the surface of the transfer film, thereby causing the transfer film to separate from the liner and to radially extend to the inside surface of the dish.

Insofar as known, no prior art discloses how to apply a substantially impermeable film to a substantially impermeable surface having one or more depressions therein. "Depression" is defined herein as a recess or cavity in the surface of an article which is defined by interior surface portions and is completely surrounded by a lip or wall defined by relatively higher exterior surface portions.

Summary of Invention

The present invention provides a method for vacuum-application of a film to the surface of a substrate and an apparatus for practicing such method. Advantageously, the method and apparatus provided herein may be used to apply a continuous, substantially impermeable, conformable film to a substantially impermeable substrate or surface, i.e., it is not necessary to provide a pattern of channels or perforations in either the film or the surface for trapped gas, e.g., air, to escape as the two are contacted and bonded together. "Conformable" is used herein to mean sufficiently flexible and extensible, under certain conditions of heat and pressure, to intimately assume the contour of a surface.

Importantly, the method and apparatus of the present invention may be used to apply a conformable film to surfaces of articles having one or more depressions therein. Such surfaces may be found, for instance, on articles having embossed, i.e., raised-relief or intaglio, characters. The method and apparatus provided herein may also be used to apply a conformable film to the surface of articles having substantially flat, convex, or concave surfaces. The invention may also be used to apply a film to articles having compound surfaces, i.e., surfaces whose contours comprise combinations of flat, concave, and/or convex regions. In an application of particular utility, the method and apparatus may be used to apply a colored film to an article, e.g., applying a transfer paint film to an automobile part, e.g., a fender or headlight cover. Other examples of applications wherein the present invention may be useful include application of dust-free or sterile wrappings or hermetic seals to an article to maintain the cleanliness or sterility thereof or to protect it from corrosive or oxidative effects of an ambient environment.

The present invention relates in part to a method for vacuum-application of a film to the surface of an article wherein the film is sufficiently conformable, i.e., sufficiently flexible and extensible, either at ordinary or elevated temperature, to conform to the surface of the article, and wherein the film has a major surface that is adapted to bond to the surface of the article, for instance, wherein an adhesive layer which is heat-activatable or pressure-sensitive in nature is provided on the major surface of the film. The method is particularly well-suited for application of a film to an application surface which comprises one or more depressions and wherein the film is to be applied over the entire surface in a single application to provide an essentially continuous film thereover. Briefly summarizing, the method of the present invention comprises:

A) arranging the article to which the film is to be applied in a first pressure chamber having an opening, the opening communicating with the opening of a second pressure chamber to provide a passage therebetween, the article being arranged in proper orientation such that the surface to which the film is to be applied, i.e., the "application surface", is preferably substantially facing the opening of the first pressure chamber;

B) sealing, in pressure-tight fashion, the passage with the film such that the film separates the first and second pressure chambers and is oriented such that the major, i.e., bonding, surface of the film is facing the article, the film preferably being disposed so as to not be in contact with the article;

C) substantially evacuating the first and second pressure chambers, while preferably maintaining substantially equal pressure in each pressure chamber; thereafter

D) conforming the film to the application surface by controllably increasing the pressure in the second pressure chamber thereby causing the film to distend into the first pressure chamber toward the article such that the bonding surface of the film contacts the application surface and such that the film is intimately conformed to the contours of the application surface;

E) bonding the film to the application surface, typically by activating an adhesive layer on the bonding surface of the film; and

F) after an effective time, equalizing the pressures in the pressure chambers. In other embodiments provided herein, the film may be heated at an appropriate time, e.g., to improve the conformability thereof, or the film and/or article may be heated to improve or induce bonding between film and article. In such embodiments, it may be preferred to cool the film and/or article after bonding before handling or removal from the vacuum-applicator. Also, in some embodiments, an optional, substantially impermeable, conformable diaphragm may be secured across the opening of the first pressure chamber in cooperation with the film. Such diaphragms may provide the desired pressure-tight separation between the first and second pressure chambers to enable vacuum-application to desired surfaces, according to the present invention, of conformable films which are noncontinuous.

The present invention further provides an apparatus for practicing such a method, i.e., a method for vacuum-application of a conformable film to the surface of an article. Such apparatus, in brief summary, comprises:

A) first and second pressure chambers, each of the pressure chambers having an opening, the openings communicating so as to provide a passage between the first pressure chamber and second pressure chamber, the first pressure chamber being sufficiently large to accomodate the article therein and typically comprising means for securely holding the article in desired orientation to the opening, i.e., such that the application surface is facing the passage;

B) means for securing the film across the passage between the first and second pressure chambers so as to separate the first and second pressure chambers and provide a pressure-tight seal therebetween, the film being oriented such that the bonding surface thereof is facing the article which is located in the first pressure chamber and preferably being disposed so as to not be in contact with the article;

C) means for substantially evacuating the first and second pressure chambers, while preferably maintaining substantially equal pressure therebetween;

D) means for thereafter controllably increasing the pressure in the second pressure chamber thereby causing the film to be distended through the opening into the first pressure chamber such that the bonding surface of the film is brought into contact with the application surface of the article and the film is intimately conformed to the contours thereof, and for maintaining such pressure for an effective time to bond to the article; and

E) means for equalizing the pressures in the first and second pressure chambers after bonding. In some embodiments, the apparatus will further comprise means for securing an optional, substantially impermeable, conformable diaphragm across the passage in cooperation with the film, as mentioned above. Depending upon the nature of the film and article, the apparatus may further comprise means for heating the film and/or article at appropriate times, e.g., to improve the conformability of the film or optional diaphragm, or to bond the film to the article, or means for cooling the film and/or article at appropriate times, e.g., after bonding to fix or quench the bond between the film and article such as provided by a layer of heat-activated adhesive.

Thus, the present invention may be used to form an article comprising a substrate having an application surface which has one or more depressions therein and a substantially impermeable film intimately conformed to the contour of the application surface, including the depressions(s) therein. Examples of such substrates include appliance parts or automobile body parts such as headlight covers, trim pieces, fenders, etc. Such parts have surfaces which may have one or more depressions therein, e.g., decorative contours or lines, for fastening purposes, embossed characters or designs, to which surfaces it is desired to provide a colored coating such as paint. Currently, such parts are typically colored by being sprayed with, or dipped into, liquid paint. According to the present invention, a conformable film of the desired paint color may be vacuum-applied to the part so as to intimately conform thereto. As will be understood, some portions of such film near, i.e., in or adjacent to, the depressions in the application surface will typically have been stretched during the vacuum-application process.

## Brief Description of Drawing

The invention will now be further explained with reference to the drawing, wherein like numbers refer to like items; and

Figure 1 illustrates in perspective view a portion of an application surface having depressions therein to which a conformable film may be applied by the present invention;

Figure 2 is a cross-sectional view of the article shown in Figure 1 along axis 2-2 after application of a conformable film thereto according to the present invention which shows the profile of the surface of the article and the film;

Figure 3 is cross-sectional view in which the article of Figure 1 is shown in the first pressure chamber of a general embodiment of the apparatus of the present invention and a conformable film is shown being intimately conformed to the surface of the article;

Figure 4 is a cross-sectional view of the first pressure chamber of an apparatus of the present invention showing an annular wheel trim ring insert to which a conformable film is being applied using a substantially impermeable, conformable diaphragm;

Figure 5 is a plan view of the diaphragm and conformable film of Figure 4;

Figure 6 is a cross-sectional view of the diaphragm and conformable film of Figure 5 along axis 6-6;

Figure 7 is a cross-sectional view of a portion of an article having a depression in the application surface thereof and a film vacuum-applied thereto according to the present invention;

Figure 8 is a cross-sectional view of an edge portion of an article and a film vacuum-applied thereto according to the present invention; and

Figure 9 is a perspective view of the first pressure chamber of the vacuum-applicator shown in Figure 3 along axis 9-9.

These figures, which are idealized, are not to scale and are intended to be merely illustrative and nonlimiting.

## Detailed Description Of The Invention

The present invention provides a method of vacuum-application of a conformable film to the surface of an article, i.e., the application surface, and an apparatus for doing so. Articles to which films may be applied according to the invention may have application surfaces having a variety of contours, including surfaces having one or more depressions therein, and surfaces which are substantially planar as well as those having flat, concave, or convex portions, or complex surfaces having combinations thereof. One example of an article for which the present invention may be of utility is a headlight cover for an automobile in which the manufacturer's name or model name of the automobile is embossed.

The present invention may be used to apply films to surfaces of articles to alter the appearance, i.e., color or texture, thereof, or may be used to provide protective films such as sterile packaging for surgical tools. For example, the film may provide a tough corrosion- and/or abrasion-resistant protective layer to an article, may serve as a thermal or electrically insulating member, may change the reflectivity of the surface of the article, may impart desired texture thereto or may provide combinations thereof.

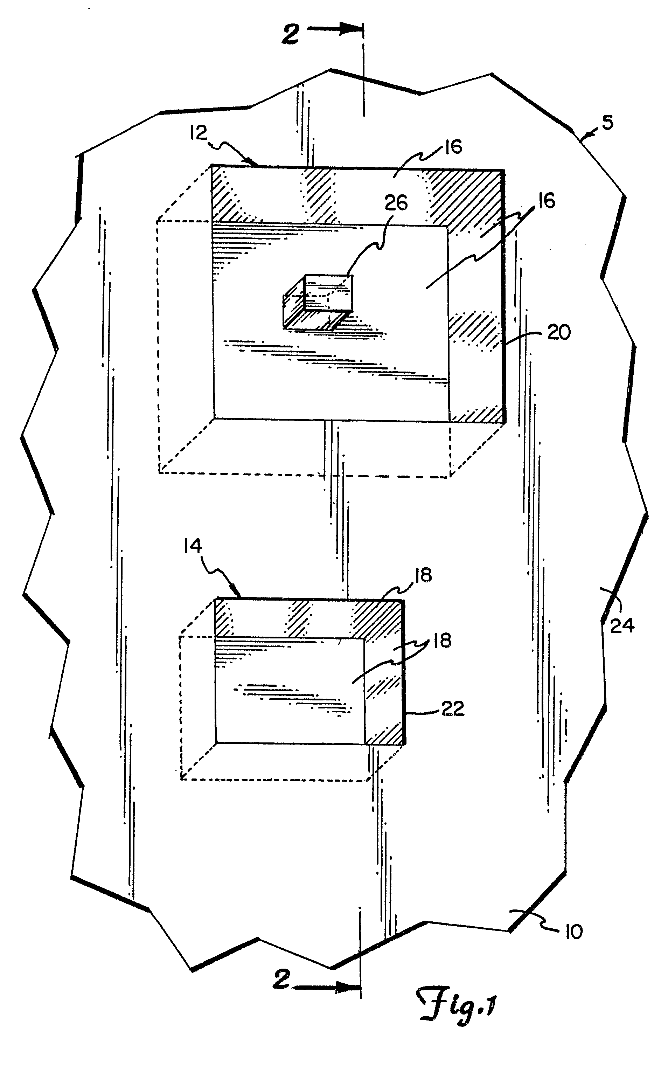

Figure 1 illustrates in perspective view typical application surface 10 of article 5 to which a film (not shown) may be applied according to the present invention. Application surface 10, as shown here, is substantially flat with depressions 12 and 14 which are defined by interior surface portions 16 and 18, respectively, and are surrounded by lips or edges 20 and 22, respectively, which are defined by the junction of interior surface portions 16 and 18 with exterior surface portion 24. Depression 12 contains protrusion 26 extending from the bottom thereof. The present invention may be used to apply a substantially impermeable conformable film to the entirety of application surface 10, intimately conforming to the contours thereof, including exterior surface portion 24 and the surfaces of depressions 12 and 14, including protrusion 26 and interior surface portions 16 and 18.

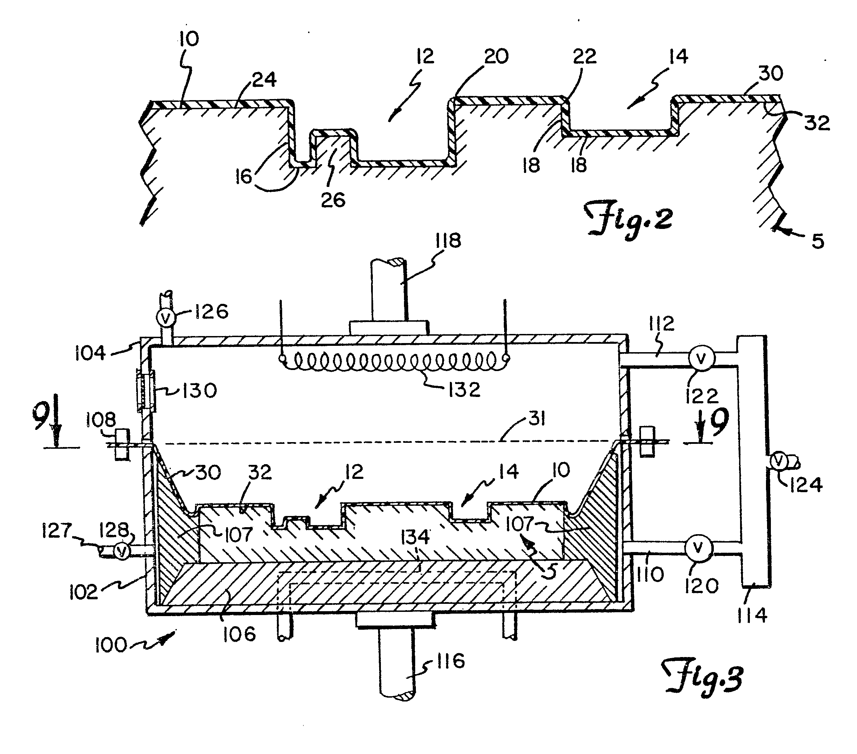

The cross-sectional profile of the surface of article 5 shown in Figure 1 is shown in Figure 2. Depressions 12 and 14 are seen to be recessed below the general plane or contour of exterior surface portion 24 of application surface 10. Film 30 has been vacuum-applied thereto, with bonding surface 32 bonded to application surface 10 of article 5.

A film that may be applied to a surface according to the invention should be sufficiently flexible and extensible to intimately conform to the surface of the article without undesirably breaking, either at ordinary temperatures, e.g., 15 C to 25 C, or at elevated temperatures, e.g., about 160 C or more. Such films are referred to herein as conformable. "Intimately conform" as used herein means to assume full contact and follow the contours of the surface in essentially continuous fashion. As will be understood, the required ranges of extensiblity and flexibility, and optimum conditions of temperature and pressure under which same may be achieved, will be determined in part by the nature of the contour of the application surface to which the film is to be vacuum-applied. Although films having lower tensile strengths tend to be easier to distend and conform to a surface, the film should have a sufficiently high tensile strength to withstand bursting or blistering, i.e., stretching uncontrollably, when subjected to the differential pressure employed by the present invention. Films which are sufficiently conformable to be vacuum-applied, according to the present invention, to surfaces having many deep or sharply defined depressions therein, will typically be substantially more extensible and flexible than films which are merely sufficiently conformable to be vacuum-applied to surfaces having only a few or smaller depessions therein.

The film has a major surface, referred to herein as a "bonding surface", that is adapted to bond to the surface of the article. For instance, the bonding surface may be covered by an adhesive, e.g., a pressure-sensitive adhesive or heat-activated adhesive, that is compatible with, i.e., will bond firmly to, the application surface. Heat-activated adhesives that can be initially contacted to the surface of an article without bonding strongly thereto, and allow the film to be moved across the application surface as it is distended and intimately conformed to the surface, and then finally be activated to provide a strong bond to the surface are typically preferred, particularly if the application surface has a severe or complex contour. In some embodiments the application surface may be covered with an adhesive which will form a secure bond to the bonding surface of the film, or the bonding surface of the film and application surface of the article may be such as to form a strong bond therebetween without provision of an adhesive layer on either member.

The strength of the bond between the bonding surface and the surface of the article should preferably exceed the elastomeric tendencies of the film to return to its original dimensions after it is intimately conformed to the application surface. Thus, it will typically be preferred that the film be selected such that the elastic limit thereof will be exceeded as the film is intimately conformed to the desired application surface such that the film will exhibit, at most, a minimal tendency to return to its original dimensions after being conformed to the contour of the application surface.

An example of a suitable film for use in the present invention is disclosed in commonly assigned copending U.S. Patent Application Serial No. 047,886 which is incorporated herein by reference. The films disclosed therein comprise a colored stratum and an adhesive layer. A preferred embodiment disclosed therein comprises an additional layer, disposed between the colored stratum and adhesive layer, that imparts high resilience to the film and the resultant coating after application to the article, thereby increasing, for instance, the resistance of the colored coating to gravel and rock impact such as may be encountered by an automobile body part. Another example of suitable films for use in the present invention are the SCOTCHCAL® Brand Series 650 Vinyl Films, available from the Minnesota Mining and Manufacturing Co. Those films typically comprise a vinyl layer which is about 50 microns (2 mils) thick and a layer of heat-activated adhesive which is also about 50 microns (2 mils) thick. In general, films which are vacuum-applied according to the invention will be between about 25 and 200 microns (1 and 8 mils) thick, however, it is to be understood that conformable films having thicknesses outside that range may be vacuum-applied according to the invention.

The method of the present invention may be practiced in an apparatus comprising first and second pressure chambers, each of the pressure chambers having an opening, the openings communicating so as to provide a passage between the first pressure chamber and the second pressure chamber. The passage between the first and second pressure chambers of vacuum-applicators of the invention may be substantially square, rectangular, oval, circular, or of other geometry.

Reference is now made to Figure 3, which is a cross-sectional illustration of a general embodiment of the apparatus of the present invention wherein is shown vacuum-applicator 100 comprising first pressure chamber 102 and second pressure chamber 104.

Article 5 to which conformable film 30 is to be vacuum-applied is arranged in first pressure chamber 102, oriented such that application surface 10 to which film 30 is to be applied is facing the passage to second pressure chamber 104. Article 5 may simply rest on supporting surface 106 within first pressure chamber 102 or first pressure chamber 102 may further comprise means, e.g., one or more clamps (not shown), for securely supporting article 5 in desired orientation and proximity to the opening. It will typically be preferred to provide means for the facile insertion into, and removal from, first pressure chamber 102 of article 5. Such means may be a second opening (not shown) into first pressure chamber 102 which can be opened and resealed, through which article 5 may be passed. Alternatively, vacuum-applicator 100 may comprise means for translating or moving first pressure chamber 102 and second pressure chamber 104 between an operational position (as shown in Figure 3) and an open position (not shown) wherein pressure chambers 102 and 104 are separated such that entry is permitted through the openings which provide the passage between first pressure chamber 102 and second pressure chamber 104. An example thereof is illustrated in Figure 3 which shows hydraulic lift columns 116 and 118 connected to first pressure chamber 102 and second pressure chamber 104, respectively.

Vacuum-applicator 100 further comprises means 108 for securing film 30 across the passage between first and second pressure chambers 102 and 104 so as to provide a pressure-tight seal of same and thereby separate first and second pressure chambers 102 and 104. Film 30 is oriented such that bonding surface 32 thereof is facing article 5. Dotted line 31 indicates the initial position and configuration of conformable film 30. Means 108 for securing film 30 across the passage between first and second pressure chambers 102 and 104 may be provided in the form of a clamping collar or press which secures film 30 in such fashion as to provide an air-tight seal of the passage. Film 30 may be fixedly secured, or may be secured in such fasion that, as the pressure in second pressure chamber 104 is increased and film 30 is distended into first pressure chamber 102, sufficient movement of film 30 is permitted enabling additional amounts of film 30 to be drawn into first pressure chamber 102 to reduce the stretching necessary as film 30 is initimately conformed to the contour of surface 10 of article 5. U.S. Patent No. 4,239,472 (Atkinson et al.), which is incorporated herein by reference, discloses a device which may be useful for securing film 30 in such embodiments.

After the passage between the pressure chambers 102 and 104 is sealed with conformable film 30, first and second pressure chambers 102 and 104 are then substantially evacuated, while preferably maintaining substantially equal pressure therebetween. Such evacuation may be achieved by withdrawal of air through conduits 110 and 112, respectively, which are each connected to a vacuum source such as a vacuum pump (not shown). Vacuum-applicator 100 is also provided with means for pressurizing pressure chambers 102 and 104, such as conduits 125 and 127, which provide means for directing fluid into second pressure chamber 104 and first pressure chamber 102, respectively. As will be understood, the system used to evacuate and to pressurize pressure chambers 102 and 104 will typically also include an appropriate arrangement of control means, e.g., such as valves 120, 122, 124, 126, and 128, such that the respective pressures in first pressure chamber 102 and second pressure chamber 104 may be individually controlled in desired fashion. One manner of maintaining a substantially equal pressure in first pressure chamber 102 and second pressure chamber 104 while evacuating same is as shown where both conduits 110 and 112 are connected to manifold 114 which is then itself connected to a vacuum source.

The pressure chambers should each be evacuated of substantially all fluid, i.e., to pressures of less than 10 Torr, preferably less than 7.5 Torr, and most preferably less than 5 Torr. Ideally each pressure chamber will be essentially entirely evacuated, i.e., to a pressure approaching 0 Torr. Typically pressure chambers 102 and 104 are evacuated in such manner that the pressure in each chamber remains substantially equal so that film 30, which separates the two pressure chambers, will not be undesirably distended prior to the desired moment. In some instances, it may be desired to prestretch film 30 to improve the conformability thereof by, e.g., initially lowering the pressure in second pressure chamber 104 to a relatively lower pressure than in first pressure chamber 102 such that film 30 is distended, i.e., stretched, into second pressure chamber 104 before both pressure chambers are evacuated.

However, if film 30 is prestretched too extensively, it may tend to wrinkle as it is being intimtely conformed to application surface 10. Furthermore, it is typically preferred that the pressures in each of pressure chambers 102 and 104 be sufficiently close to equal that film 30 is not distended sufficiently to contact any surface within either of pressure chambers 102 and 104. Some films may be damage, e.g., the finish thereon marred or the film may be creased or even punctured, by contact to the inside surface of one of the pressure chambers 102 and 104 or by premature contact to surface 10 of article 5, particularly those films that are heated to improve the conformability thereof.

If desired, vacuum-applicator 100 may be provided with one or more observation devices to aid in control of the vacuum-application process. For instance, view port 130 may be provided (shown here on second pressure chamber 104) to permit visual observation of the contour of film 30 during the vacuum-application process, and may be augmented by provision of a visible light source (not shown) inside vacuum-applicator 100. Visual observation may also be provided with video cameras or fiber optic devices. Examples of some other observation devices that may be of utility include means (not shown) for measuring temperature, e.g., thermometers, thermocouples, etc., of certain items, e.g., film 30, article 5, within vacuum-applicator 100, and means (not shown) for measuring the pressure within first pressure chamber 102 or second pressure chamber 104.

Conformable film 30 is preferably substantially free of volatile components. For instance, if bonding surface 32 comprises a layer of adhesive, the adhesive preferably does not contain a substantial portion of solvents which will volatilize in the reduced pressure of evacuated first pressure chamber 102. Such volatile components may tend to volatilize under the low pressure conditions as first pressure chamber 102 is evacuated and cause the adhesive to flake, blister, or spatter, thereby tending to spoil the final appearance of film 30 or interfere with the bond which is developed with application surface 10. Such volatile components may also tend to cause film 30 to bubble or blister from application surface 10, rather than conform intimately thereto.

Depending upon the nature of film 30 and article 5, vacuum-applicator 100 may further comprise means for heating article 5 and/or film 30 before, during, or after the evacuation of the two pressure chambers. For example, in some instances, the conformability of film 30 may be improved by heating thereof prior to and/or while being distended into pressure chamber 102 and intimately conformed to the contour of application surface 10. Such heating may be achieved by heating coil 132 which acts as a radiant heater. Alternatively, film 30 could be heated by other means (not shown), examples thereof being an induction heater, a microwave heater, or application of a flow of heated fluid in second pressure chamber 104. Depending upon the nature of bonding surface 32, it may be desired to limit such heating to prevent premature bonding to application surface 10. For instance, in those cases where bonding surface 32 comprises a layer of heat-activated adhesive, it will typically be necessary to limit the amount of heat applied to film 30 in order to prevent premature bonding of film 30 to article 5 before it is intimately conformed thereto.

After pressure chambers 102 and 104 have been substantially evacuated, the pressure in second pressure chamber 104 is controllably increased, thereby causing film 30 to be distended into first pressure chamber 102 and into contact with application surface 10. The pressure is increased until film 30 has been distended so as to intimately conform to application surface 10. The pressure in second pressure chamber 104 is preferably increased sufficiently slowly that film 30 will distend and stretch across application surface 10 and intimately conform thereto without bursting or creasing. An advantage of the present invention is that article 5 may be arranged in a general alignment with respect to the initial position of film 30 such that application surface 10 generally faces film 30. It is not necessary that application surface 10 be disposed in a precise fashion such that film 30 will be distended into contact with, e.g., depression 12 or 14, before it contacts any other portion of application surface 10.

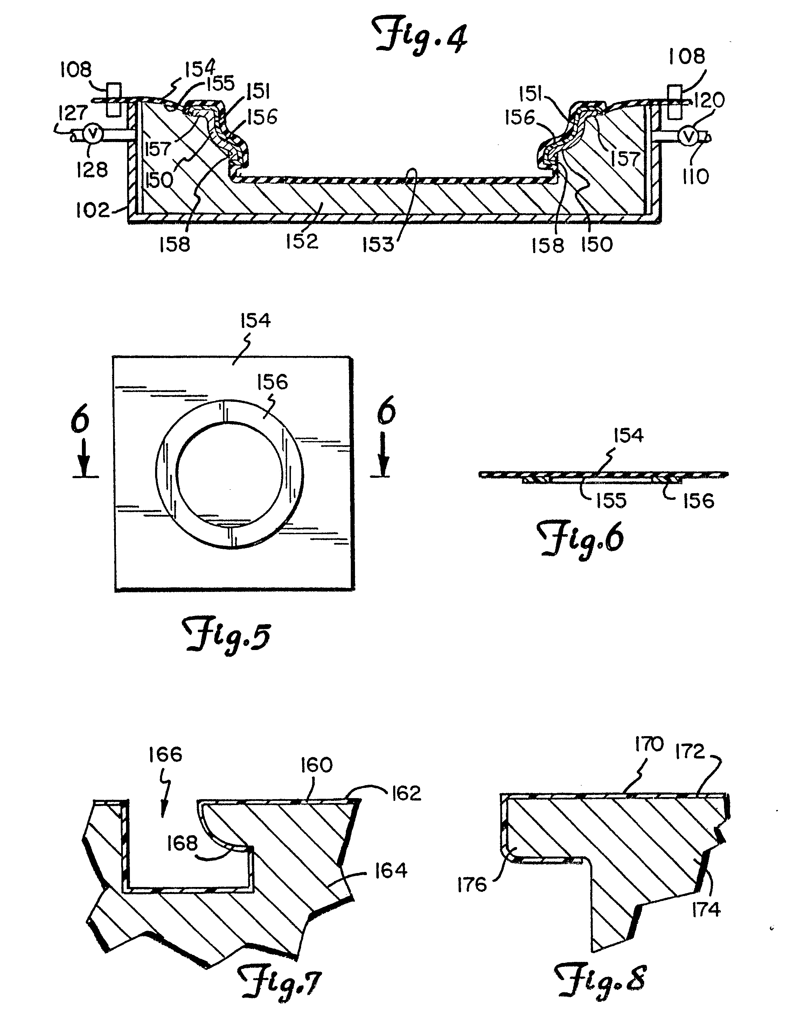

Because first pressure chamber 102 is substantially evacuated prior to distending film 30 thereinto, film 30 is distended to intimately conform to application surface 10, including depressions 12 and 14 as the pressure in second pressure chamber 102 is increased. Gas which might have been trapped and thereby hinder the application of such films to such articles by conventional pneumatic forming techniques is removed prior to application of the pressure in second pressure chamber 104 against film 30. An advantage of the sequence of operation provided by the present invention is that films may be vacuum-applied to application surfaces having many different contours, including irregular depressions therein. For instance, Figure 7 illustrates conformable film 160 that was vacuum-applied according to the present invention and intimately conformed to the contour of application surface 162, even covering the entire surface of depression 166 which forms undercut 168 to the general plane of application surface 162.

As shown in Figure 3, distension-controlling from 107 may be fitted in first pressure chamber 102 to aid in controlling the manner in which film 30 distends so as to limit the degree to which film 30 is stretched, and thereby prevent bursting or uncontrolled stretching of film 30. Form 107 is shaped to allow film 30 to distend into contact with application surface 10 but prevents film 30 from distending in undesired fashion such as stretching excessively down the side of article 5 between article 5 and the side walls of first pressure chamber 102. Form 107 is shown in Figure 3 as a solid, but may, however, be in the form of a sheet or web, such as a cloth skirt, extending between the article and side of the first pressure chamber in the desired fasion.

After film 30 is intimately conformed to the contour of application surface 10, the pressure in each pressure chamber, i.e., substantial evacuation of first pressure chamber 102 and relatively higher pressure of second pressure chamber 104, is maintained for an effective time to permit film 30 to bond to application surface 10. Such an effective time will typically be at least long enough for the strength of the bond between bonding surface 32 and surface 10 to exceed any elastomeric forces exerted by film 30.

If film 30 comprises a heat-activated adhesive, after film 30 has been intimately conformed to application surface 10, it may be heated to activate the adhesive and thereby provide a strong bond to article 5. Such heating may be provided by radiant heating means 132. Alternatively, heated fluid may be circulated through the second pressure chamber 104, e.g., forced hot air. In another embodiment, article 5 and film 30 may be heated with heating means embedded within the bottom surface of first pressure chamber 102 (not shown) or within supporting member 106. For instance, hot fluid may be circulated through hollow tube 134. An advantage of such a hollow tube is that, after article 5 and film 30 are heated for sufficient time to develop a strong bond therebetween, a coolant may be circulated through hollow tube 134 to cool article 5 and film 30, thereby providing a quenching action to fix the bond between film 30 and application surface 10 and making the resultant product safer and easier to handle. Examples of alternative means which may be also used to heat film 30 and/or article 5 include an induction heater and a microwave heater.

After film 30 has been contacted to application surface 10 for an effective time to achieve a strong bond thereto, the pressure in first pressure chamber 102 is equalized, i.e., increased, to that in second pressure chamber 104. It may be preferred to cool film 30 and article 5 prior to such equalization to ensure a strong bond therebetween as described above. Cooling may be achieved by simply waiting for a period to allow sufficient heat to dissipate, or by active means, such as circulating a cool fluid through second pressure chamber 104 or activating a cooling device located within first pressure chamber 102, e.g., tube 134 as described above.

Some or all of the excess portions of film 30 may be trimmed from article 5 with trimming means, typically, after the pressures in first and second pressure chambers 102 and 104 have been equalized. Such excess portions may be the portions of film 30 that extend between application surface 10 and film securing means 108, and depending upon the shape of article 5, portions of film 30 that extend between segments of application surface 10. Examples of suitable trimming means include hand operated devices, e.g., knife, and automatic devices capable of communicating with at least a portion of the shape of the application surface, including rotary knife or knives, a laser cutter, or a die press.

The present invention may also be used to vacuum-apply a noncontinuous film to a surface having one or more depressions therein. For instance, Figure 4 illustrates article 150, such as an annular wheel trim ring insert, to application surface 151 of which it is desired to apply a colored film. Article 150 is arranged in first pressure chamber 102 on specially shaped supporting member 152.

In this instance, a substantially impermeable, conformable diaphragm 154 is used to seal the passage between first pressure chamber 102 and the second pressure chamber (not shown), and conformable film 156 is mounted on side 155 of diaphragm 154 facing article 150. Figure 5 shows annular film 156 on diaphragm 154. Figure 6 is a cross-sectional view of the construction of Figure 5 through axis 6-6. In an alternative embodiment, the film that is to be vacuum-applied to article 150 may be coextensive with diaphragm 154 and simply have a round hole cut out of the middle thereof rather than being in the annular form shown.

In some instances, film 156 and diaphragm 154 will exhibit sufficient cling to cause film 156 to remain in place on diaphragm 154 throughout the vacuum-application process. It may be desirable, however, to coat a suitable cling agent (not shown), e.g., oil, low-tack pressure-sensitive adhesive, etc., on either film 156 or side 155 of diaphragm 154 to cause film 156 to cling sufficiently to side 155. It is typically preferred that film 156 remain mounted on diaphragm 154 substantially without movement on side 155 thereof until after film 156 and diaphragm 154 are intimately conformed to application surface 151 of article 150 to ensure proper alignment of film 156 on article 150 and to prevent wrinkling or creasing of film 156 during the vacuum-application process.

Vacuum-application is performed in the same manner as described above with reference to Figure 3. When the pressure in the second pressure chamber is increased, diaphragm 154 and film 156 are distended into first pressure chamber 102 and intimately conformed to application surface 151. An advantage of using diaphragm 154 when applying film 156 to article 150 of the shape shown relates to the manner in which film 156 and diaphragm 154 distend into first pressure chamber 102. If the vacuum-application process were to be performed without use of diaphragm 154, and article 150 was arranged so as to be approximately centered to the opening of first pressure chamber 102, the distending film would contact supporting member 152 near the center thereof and then distend or balloon radially outwardly from that point. Depending upon the shape and dimensions of article 150 and application surface 151, such substantial stretching of the film might be required so as to exceed the extensibility limits of the film and thereby degrade the performance or appearance thereof. Using diaphragm 154, however, film 156 may be precut to approximate the dimensions of article 150 and subjected to less substantial stretching during vacuum-application. It will thus be typically preferred to employ a diaphragm having higher extensibility limits than those of the film being applied.

Because of the shape of supporting member 152, i.e., such that upper edge 157 and lower edge 158 of article 150 are exposed and surface 153 of supporting member 152 is below lower edge 158, film 156 may be wrapped around upper edge 157 and lower edge 158 or article 150. Such wrapping may be preferred for aesthetic reasons, such as if film 156 is being applied for decorative purposes, or to provide more complete covering of the surface of article 150 by film 156.

After an effective time, and activation, if required, of the bonding surface of film 156, the pressure in pressure chamber 102 may be increased, i.e., equalized to that of the second pressure chamber. Depending upon their respective properties and those of any cling agent employed, diaphragm 154 may readily separate from film 156. In those instances where the cling force between the film 156 and diaphragm 154 is greater, means (not shown) for separating film 156 and diaphragm 154 may include means for increasing the pressure in first pressure chamber 102 above the pressure in the second pressure chamber or means for applying a peel force to diaphragm 154.

Diaphragm 154 is made of a substantially impermeable, conformable material. Examples of some suitable materials include silicone rubbers and neoprene. Depending upon the materials used and contour of the application surface of the article, diaphragm 154 may be reused a number of times, in which case it should preferably be durable and substantially elastomeric so as to return to its original contour. Alternatively it may be used once and then discarded. In those instances where the diaphragm or film is to be heated, e.g., to improve the conformability thereof or to activate bonding to the application surface, the diaphragm is typically preferably of energy-absorbant color, e.g., black, to facilitate such heating.

An advantage of using a diaphragm with the present invention is as described above wherein the present invention may be used to vacuum-apply films which are noncontinuous, e.g., have holes or gaps cut therein such as to more closely approximate the size of the application surface so as to reduce or eliminate the excess portions of the film used during the application process, or which are intended to cover only a portion of the surface of the article. A further advantage is that the diaphragm may be used to reinforce the film to enable vacuum-application as taught herein of very weak films which do not exhibit sufficient tensile strength to provide a pressure-tight seal of the passage between the first and second pressure chambers 102 and 104. In some embodiments, the diaphragm may have channel therein such that hot or cold fluid may be circulated therethrough to respectively heat or cool the film and, in some instances, the article as desired.

Another advantage of the present invention is that films may be vacuum-applied so as to wrap around the edges of surfaces, if desired, to provide, e.g., an edge seal or an aesthetically pleasing appearance. For instance, with reference to Figure 8, colored conformable film 170 was vacuum-applied to application surface 172 of article 174 and wrapped around overhanging edge 176. Unlike article 5 of Figure 3, article 174 has overhanging edge 176 around to the underside of which film 170 was intimately conformed. Conforming a film in this fashion may be achieved by vacuum-application either with a diaphragm in the manner described above, or simply by vacuum-application of a film without such a diaphragm. It may be convenient to provide means in the first pressure chamber, e.g., a mechanically, electrically or pneumatically operated lift, for moving the article toward the passage to the second pressure chamber while the film is being conformed to the application surface in order to facilitate intimate conformation of the film to the contour of the edge portion of the article. For instance, the film may be partially distended into the first pressure chamber and conformed to that part of the application surface which is closest to the passage to the second pressure chamber, and then the article moved toward the passage by the means described above such that the film is more easily intimately conformed to the edge portion of the article. In such instances, if a distension-controlling form is used, it is preferably adapted to accommodate such change in the position of the article, such as by changing configuration or position. For instance, a portion of the form may be flexible such that, after movement of the article as described, the form is in a new configuration of position wherein it will aid in control of the manner in which the film is distended.

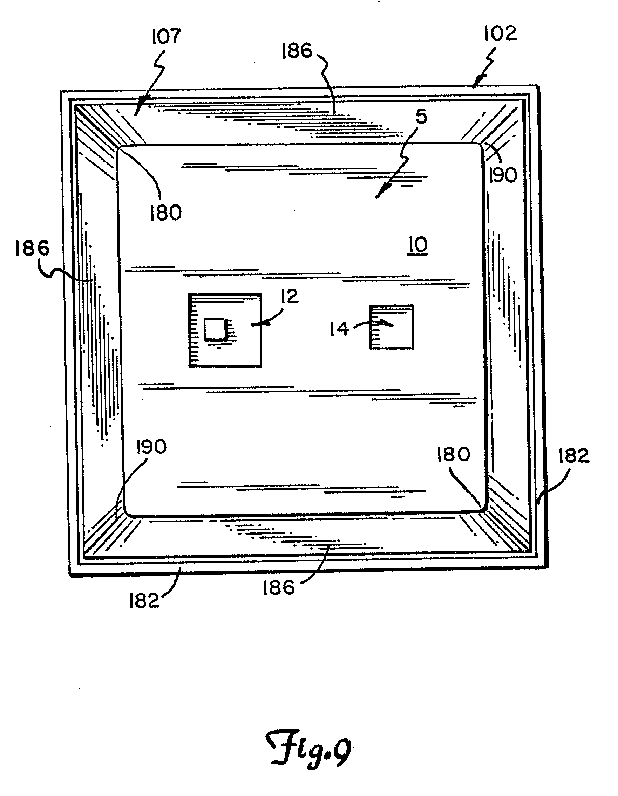

In some instances, especially where the article to which the film is to be vacuum-applied has sides or edges which have corners, such as corners 180 of article 5 in Figure 9, vacuum-application according to the invention may tend to result in wrinkles in the film at the corners of the article. If desired, e.g., for aesthetic reasons, such wrinkling may be minimized or eliminated by using a contoured distension-controlling form such as form 107 shown in Figure 9. Form 107 comprises one or more sloping sides 186 that extend from article 5 to sides 182 of first pressure-chamber 102 and are substantially planar in form. Figure 3 shows a cross-sectional view of form 107 in these regions. Referring again to Figure 9, in the regions of form 107 corresponding to a corner of the article, e.g., region 190 corresponding to corner 180, where adjacent sloping sides 186 of form 107 intersect, instead of shaping form 107 with a linear intersection between the adjacent planar sides 186, the intersection in region 190 is in rounded form. Such a distension-controlling form is described herein as being cooperatively contoured. During vacuum-application, the film (not shown), which will be stretched from side 182 of first pressure-chamber 102 to application surface 10, will be supported along the rounded intersection in region 190 of cooperatively contoured form 107 and the distension of the film controlled such that wrinkling of same at corner 180 of article 5 will be minimized or eliminated.

The present invention will now be explained by the following illustrative example which is intended to be nonlimiting.

### Example 1

This example was performed to illustrate utilization of the present invention to apply a paint film to a headlight cover for a Pontiac FIERO automobile, and was performed with a two chamber vacuum-applicator. The two pressure chambers could be translated between an open position and an operational position as shown in Figure 3. The first pressure chamber contained a cooperatively contoured distension-controlling form of the type shown in Figure 9 fitted to the dimensions of the headlight cover. Unless otherwise indicated, all amounts are expressed in parts by weight.

A paint film was formed as follows. A clear coat composition (48.3 parts BASF-Inmont 410CD214, 47.9 parts DESMODUR Z-4370, and 3.8 parts DESMODUR N-751) was coated with a knife coater at a wet thickness of about 0.10 millimeter (4 mils) on a carrier (0.09 millimeter (3.5 mils) thick biaxially-oriented polypropylene film, TX-350, available from Trea, Inc.) and partially cured for 5 minutes at 65°C (150°F) and 2.5 minutes at 110°C (235°F). A 0.10 millimeter (4 mils) wet thickness white paint coating (72.7 parts BASF-Inmont 7L313119, 24.2 parts Z-4370, 2.1 parts N-751) was coated onto the partially cured clear coat and partially cured in the same fashion. A 0.15 millimeter (6 mils) wet thickness layer of DESMOLAC 4125 was then coated onto the white layer in the same fashion and air-dried for 5-10 minutes as the knife bar of the coater was cleaned. A 0.15 millimeter (6 mils) wet thickness layer of QI-17 Aliphatic Polyester Urethane Adhesive, available from K.J. Quinn, Inc., was coated over the layer of DESMOLAC 4125 and the resultant film, and then cured for 5 minutes at 65°C (150°F) and then 25 minutes at 110°C (235°F). The film was then allowed to cool to room temperature.

The headlight cover, which had the legend "PONTIAC" embossed therein in intaglio form, was preheated in an oven to a temperature of about 150°C (300°F) and placed in the first pressure chamber with the cooperatively contoured distension-controlling form as shown in Figure 3.

The film was inserted into a clamping frame such that the adhesive layer, i.e., bonding surface, of the film was facing the first pressure chamber. The clamped film was then moved between a bank of radiant heaters, heated to render same more conformable, and then returned over the first pressure chamber.

The first and second pressure chambers were brought together in pressure-tight fashion and the film sealed therebetween. The first and second pressure chambers were then evacuated by opening a valve from each to a vacuum source. The second pressure chamber in this apparatus was of larger volume than the first pressure chamber so the conduit to the second pressure chamber was opened approximately two seconds before the conduit to the first pressure chamber was opened to maintain substantially equal pressure therebetween. The vacuum was continuously applied to each pressure chamber until a vacuum of approximately 29.62 inches of mercury (i.e., absolute pressure of about 7.7 Torr) was achieved.

Another conduit to the second pressure chamber was then opened to allow air to bleed into the chamber under atmospheric pressure, thereby causing the film to distend into the first pressure chamber and intimately conform to the surface of the headlight cover.

The pressure in the second pressure chamber and vacuum in the first pressure chamber were then maintained for an effective period to allow the film to bond to the surface of the headlight cover. After the effective period, the second pressure chamber was opened and a fan used to cool the film and article.

The headlight cover with film bonded thereto was removed from the first pressure chamber and the excess film trimmed therefrom with a knife.

Visual inspection revealed that the decorative film had been intimately conformed and bonded to the entire application surface of the headlight cover, including into the intaglio characters of the "PONTIAC" legend, substantially without entrapment of air.

Various modifications and alterations of this invention will become apparent to those skilled in the art without departing from the scope and spirit of this invention.

## Claims

1. Apparatus for vacuum-application of a film to the application surface of an article, said film being sufficiently flexible and extensible to intimately conform to the contour of said application surface and having a bonding surface that is adapted to bond to said application surface, characterized in that said apparatus comprises:

A) first and second pressure chambers, each of said pressure chambers having an opening, said openings communicating so as to provide a passage between said first and second pressure chambers, said first pressure chamber being sufficiently large to accomodate said article therein;

B) means for securing said film across said passage so as to separate said first and second pressure chambers and provide a pressure-tight seal therebetween, said film being oriented such that said bonding surface faces said application surface;

C) means for substantially evacuating said first and second pressure chambers;

D) means for thereafter controllably increasing the pressure in said second pressure chamber so as to distend said film into said first pressure chamber such that said bonding surface of said film is brought into contact with said application surface and such that said film is intimately conformed to the contour of said application surface, and for maintaining said pressure in said second pressure chamber for an effective time to bond said film to said application surface; and

E) means for equalizing the pressures in said first and second pressure chambers after bonding.

2. The apparatus of claim 1 further characterized in that said apparatus further comprises at least one of the following:

means for maintaining substantially equal pressure in said first and second pressure chambers while substantially evacuating said first and second pressure chambers; or

means for securely holding said article in desired orientation to said passage.

3. The apparatus of claim 1 further characterized in that said apparatus further comprises means for securing a substantially impermeable, conformable diaphragm across said passage in cooperation with said film, and also further comprises a diaphragm, said diaphragm being sufficiently flexible and extensible to intimately conform to said contour of said application surface, said diaphragm being secured on the opposite side of said film from said first pressure chamber such that said diaphragm may be distended into said first pressure chamber so as to force said film into contact and intimate conformity with said contour of said application surface when the pressure in said second pressure chamber is increased, and said diaphragm being separable from said film.

4. The apparatus of claim 3 further characterized in at least one of the following: said diaphragm has at least one of a channel therethrough, or an energy-absorbant upper surface; or said apparatus further comprises means for separating said diaphragm from said film after said bonding.

5. The apparatus of any one of claims 1-4 further characterized in that said means for substantially evacuating said first pressure chamber is capable of providing a pressure of less than about 10 Torr in said first pressure chamber.

6. The apparatus of any one of claims 1-5 further characterized in that said apparatus further comprises at least one of the following: means for heating at least one of said article or said film; or means for cooling at least one of said article or said film.

7. The apparatus of any one of claims 1-6 further characterized in that said means for increasing said pressure in said second pressure chamber is capable of providing a pressure of at least 1 atmosphere.

8. The apparatus of any one of claims 1-7 further characterized in that said apparatus further comprises at least one of the following: means for trimming excess portions of said film after said effective time, said means for trimming said film being capable of communicating with at least a portion of the shape of said application surface and trimming said film in registry with said portion;

means for translating said first and second pressure chambers between an operational position and an open position; or

means for moving said article toward said passage to said second pressure-chamber while said film is being conformed to said application surface.

9. The apparatus of any one of claims 1-8 further characterized in that said apparatus further comprises at least one of the following:

means for measuring the pressure in at least one of said first and second pressure chambers;

means for visually observing said film while said first and second pressure chambers are evacuated and while the pressure in said second chamber is increased to distend said film into contact with said application surface;

means for measuring the temperature of at least one of said article or said film; or

a distension-controlling form.

10. The apparatus of claim 9 further characterized in at least one of the following:

at least a portion of said distension-controlling form is flexible; or

said distension-controlling form is cooperatively contoured.

11. A method for vacuum-application of a film to the application surface of an article, said film being sufficiently flexible and extensible to conform to said application surface and having a bonding surface that is adapted to bond to said application surface, characterized in that said method comprises:

A) arranging said article in a first pressure chamber having an opening, said opening communicating with the opening of a second pressure chamber and providing a passage between said first and second pressure chambers;

B) sealing, in pressure-tight fashion, said passage with said film such that said film separates said first pressure chamber and said second pressure chamber and is oriented such that said bonding surface of said film is facing said article;

C) substantially evacuating said first and second pressure chambers; thereafter

D) conforming said film to said application surface by controllably increasing the pressure in said second pressure chamber thereby causing said film to distend into said first pressure chamber toward said article such that said bonding surface of said film contacts said application surface and such that said film is intimately conformed to the contours of said application surface;

E) bonding said film to said application surface; and

F) after an effective time, equalizing the pressure in each of said chambers.

12. The method of claim 11 further characterized in at least one of the following:

said first pressure chamber is evacuated to a pressure of less than about 10 Torr;

substantially equal pressures are maintained in said first and second pressure chambers while said first and second pressure chambers are substantially evacuated; or

the pressure in said second pressure chamber is increased to at least 1 atmospheres to conform said film to said contour of said surface of said article.

13. The method of claim 11 further characterized in that at least one of said article or said film is heated, or heated then cooled.

14. The method of any one of claims 11-13 further characterized in that said method further comprises trimming excess portions of said film after said effective time.

15. The method of any one of claims 11-14 wherein said film is further characterized in at least one of the following:

comprises a colored layer and an adhesive layer adapted to bond to said application surface; or

is between about 25 microns and about 200 microns thick.

16. The method of any one of claims 11-15 further characterized in at least one of the following:

said surface of said article has at least one depression therein, or

is a complex surface; or is substantially impermeable to air.

17. The method of any one of claims 11-13 further characterized in that said method further comprises:

(1) securing a substantially impermeable, conformable diaphragm across said opening in cooperation with said film, said diaphragm being sufficiently flexible and extensible to intimately conform to said contour of said application surface, said diaphragm being secured on the opposite side of said film from said first pressure chamber such that said diaphragm is distended into said first pressure chamber so as to force said film into contact and intimate conformity with said contour of said application surface when the pressure in said second pressure chamber is increased, and

(2) separating said diaphragm from said film after said effective time.

18. The method of claim 17 further characterized in at least one of the following: said diaphragm is substantially elastomeric, or said diaphragm has a channel therethrough.

19. The method of any one of claims 11-18 further characterized in that as said film is distended into said first pressure chamber, the distension thereof is controlled in part by a distension-controlling form.

20. The method of claim further 19 characterized in at least one of the following: at least a portion of said distension-controlling form is flexible, or said distension-controlling form is cooperatively contoured.

21. The method of any one of claims 11-20 further characterized in that said article is moved toward said passage to said second pressure chamber while said film is being conformed to said application surface.

22. An article comprising a substrate having an application surface having one or more depressions therein and a substantially impermeable film intimately conformed to said application surface, at least some portions of said film near said depressions having been stretched.

0302703

Fig.1

0302703

Fig.2

Fig.3

Fig.4

Fig.5

Fig.6

Fig.7

Fig.8

0302703

Fig.9